Europäisches Patentamt

European Patent Office

Office européen des brevets

(19)

(11) Publication number: **0 026 666**
**B1**

(12) **EUROPEAN PATENT SPECIFICATION**

(45) Date of publication of patent specification: 25.05.83

(21) Application number: 80303432.1

(22) Date of filing: 29.09.80

(51) Int. Cl.³: **C 04 B 35/48,**
**G 01 N 27/56**

(54) Method of producing sintered zirconia article.

(30) Priority: 28.09.79 JP 125589/79

(43) Date of publication of application:
**08.04.81 Bulletin 81/14**

(45) Publication of the grant of the patent:
**25.05.83 Bulletin 83/21**

(84) Designated Contracting States:
**BE DE FR GB SE**

(56) References cited:
**DE - A - 2 939 428**
**US - A - 3 620 781**
**US - A - 3 887 387**
**US - A - 4 067 745**
**US - A - 4 219 359**

**STAHL UND EISEN, vol. 98, no. 16, August**
**1978, pages 825—829 Düsseldorf, DE. D.**
**JANKE et al.: "Eine neue Tauchsonde zur elek-**
**trochemischen Schnellbestimmung des**
**gelösten Sauerstoffs in Metallschmelzen"**

(73) Proprietor: **Sumitomo Aluminium Smelting**
**Company Limited**
**No. 15, Kitahama 5-chome Higashi-ku**
**Osaka-shi Osaka-fu (JP)**

(72) Inventor: **Yamada, Koichi**
**11-26 Hoshigoecho**
**Niihama (JP)**
Inventor: **Shinya, Yasuo**
**2-218 Ikkucho 2-chome**
**Niihama (JP)**

(74) Representative: **Geering, Keith Edwin et al,**
**REDDIE & GROSE 16 Theobalds Road**
**London WC1X 8PL (GB)**

Courier Press, Leamington Spa, England.

# Method of producing sintered zirconia article

The present invention relates to a method of producing a sintered zirconia article. When zirconia powder is sintered alone, there occurs in the vicinity of 1000°C. a transition from the monoclinic to the tetragonal phase, accompanied by a great volume change, and in the course of heating and cooling the sintered article breaks. Therefore, in conventional methods of producing a sintered zirconia article, stabilizing agent such as CaO, MgO, $Y_2O_3$, etc. is mixed with the zirconia, forming a solid solution therewith and resulting in a sintered zirconia article of cubic phase crystal structure which is more resistant to breakage.

Zirconia solely of cubic crystal structure is called fully stabilized zirconia, and is supplied for use as refractory elements, oxygen sensors, etc. as a solid. However, a fully stabilized sintered zirconia article has a relatively large coefficient of thermal expansion, and when subject to rapid temperature change, as in the exhaust gas from an internal combustion engine, excessive thermal stress is generated therewithin. Accordingly, there have been studied various methods of improving the thermal shock resistance of sintered zirconia articles. For example, a sintered zirconia article for use as an oxygen sensor has been proposed which retains 5—35 wt.% of monoclinic crystal structure (see laid open Japanese Patent Application JA—A 128612/1978).

In the latter sintered article, the monoclinic portion undergoes transition to and from the tetragonal phase during use, and a volume change arises in this portion which scatters to form gaps in said crystal structure portion and absorbs thermal stress generated in the cubic portions. Although this sintered article is thus of improved thermal shock resistance compared to the fully stabilized zirconia article, it does not always afford satisfactory results under severe conditions, e.g. as a sensor for the measurement of oxygen concentration in molten iron.

Another process for producing sintered zirconia articles retaining a minor proportion of monoclinic crystalline structure is disclosed in US Patent US—A 3 887 387.

The present invention provides a method of producing a sintered zirconia article not more than 70 wt.% of which is of cubic phase crystal structure and which is constituted by 5—40 wt.% of particles of 1 to 30 $\mu$m diameter and correspondingly 95—60 wt.% of particles of 30—300 $\mu$m diameter, which method comprises mixing (a) from 10 to 50 wt.% of partially stabilized zirconia powder of particle diameter not greater than 20 $\mu$m obtained by sintering an admixture of zirconia powder and stabilizing agent therefor and pulverizing the sintered mixture, and (b) correspondingly 90—50 wt.% of zirconia powder of particle diameter not greater than 20 $\mu$m and stabilizing agent therefor, shaping the resulting mixture, sintering the shaped mixture at a temperature in the range from 1500 to 1900°C for from 0.5 to 30 hours, and then heat treating the sintered mixture at a temperature from 1200° to 1500°C for from 1 to 30 hours.

The partially stabilized zirconia powder, obtained by admixing zirconia powder with stabilizing agent, sintering the admixture and pulverizing the sintered admixture, is partially of monoclinic crystal structure in the sintered admixture. For (a) and in (b), any known stabilizing agent for obtaining a stabilized sintered zirconia article may be used; thus any one or more of CaO, MgO, $Y_2O_3$ and the like may be mixed with the zirconia powder, and the amount in either stage is preferably not more than 15 mol %, most preferably from 3 to 10 mol %.

Preferably, the particle diameter of the starting materials (a) and (b) is not greater than 10 $\mu$m.

The mixing ratio of the starting materials is 10—50 wt.% of partially stabilized zirconia powder and the remainder, i.e. 90—50 wt.%, zirconia powder and stabilizing agent.

If the amount of partially stabilized zirconia powder exceeds 50 wt.%, it is impossible to obtain a sintered article having the high sintered density (for example 5.4 g/cm³ or higher) required for desired use as an oxygen sensor; if the amount is less than 10 wt.%, the ratio of coarse particles in the sintered article increases, and it is impossible to obtain a sintered article having the specified particles size distribution, so that the improved thermal shock resistance is not attained. When partially stabilized zirconia powder is not used, it is impossible to obtain a sintered zirconia article having high sintered density, even if the sintered zirconia article is produced with the specified particle size distribution (for example, by initially compounding zirconia powder and stabilizing agent so that particles of 1—30 $\mu$m diameter constitute 5—40 wt.% and particles of 30—200 $\mu$m diameter constitute 95—60 wt.% and sintering and then heat treating the mixture).

The mixture of partially stabilized zirconia powder and zirconia powder plus stabilizing agent in the above ratio is shaped and sintered and further heat-treated at from 1200° to 1500°C.

In this way, a sintered zirconia article is obtainable whose crystal structure after the heat-treatment is not more than 70 wt%, preferably 10—50 wt.%, cubic and which is constituted by 5—40 wt.% of particles of a diameter of 1—30 $\mu$m and the remainder, i.e. 95—60 wt.% particles of diameter 30—300 $\mu$m, preferably 30—200 $\mu$m.

If the cubic crystal structure formed in the sintered article exceeds 70 wt.%, the coefficient of thermal expansion is too high.

When particles of 1—30 $\mu$m diameter constitute under 5 wt.% of the sintered crystal structure, and when particles of 30—200 $\mu$m diameter exceed 95 wt.%, the thermal shock resistance is low. On

2

# 0 026 666

the other hand, if particles of 1—30 $\mu$m diameter exceed 40 wt.% and those of 30—200 $\mu$m diameter are less than 60 wt.%, it is generally impossible to obtain a sintered article having the high sintered density required for use as an oxygen sensor.

To obtain a sintered article having such desired physical properties, it is necessary to control such factors as the mixing ratio of the starting materials, the sintering conditions, the heat treatment conditions, etc. Sintering is effected at 1500° to 1900°C (preferably 1600° to 1800°C.), for 0.5 to 30 hours (preferably 1 to 15 hours). In the subsequent heat treatment, the sintered article is annealed at 1200° to 1500°C. (preferably 1250° to 1350°C.), for 1 to 30 hours, preferably 5 to 20 hours. If the heat treatment is omitted, the improvement in thermal shock resistance is extremely low, even if all other specified conditions are observed.

Whilst only zirconia powder and stabilizing agents have been mentioned as starting materials, it is, of course, possible to use in addition to these main and essential components a known sintering accelerating agent and/or particle growth promoting agent, such as silica, alumina, titania, kaolin, mullite, etc., in an amount insufficient to appreciably impair the effects of the present invention.

Whilst the reason is not fully understood, it is possible by the method of the present invention to obtain a sintered zirconia article of high thermal shock resistance and high sintered density, suitable, for example for use as an oxygen sensor.

The invention is further illustrated, in non-limiting manner, by the following Examples and Comparative Examples.

Example 1

97 parts by weight of commercially available zirconia (purity: higher than 99%, particle diameter: 1 $\mu$m) and 3 parts by weight of commercially available light burned magnesia as a stabilizing agent were admixed by means of a ball mill. After the admixture was sintered at 1500°C. for one hour, the sintered admixture was pulverized by means of a vibration mill to obtain partially stabilized zirconia powder containing 60 wt.% of a cubic crystal structure and having an average particle diameter of 1.5 $\mu$m.

With 20 parts by weight of the thus obtained partially stabilized zirconia powder, there were mixed 80 parts by weight of the same mixture of zirconia powder and light burned magnesia as used in preparing the partially stabilized zirconia. Glycerin was added as a binder to this mixture, and the mixture was then shaped by a rubber press. The resulting shaped article was lathed to produce a tube of 4.5 mm inner diameter and 7.0 mm outer diameter with one end closed and the other end open. After this tube was sintered at 1700°C. for 10 hours, the temperature was lowered at the rate of 100°C./hour down to at 1300°C., and then the tube was heat treated at 1300°C. for 10 hours.

The physical properties of the sintered zirconia article obtained after the heat treatment were as follows:

| | |
|---|---|
| Bulk density | 5.5 g/cm³ |
| Water absorption | 0.07% |
| Content of cubic phase | 44% by weight |

Diameters of the constituting particles

1—30 $\mu$m: 15% by weight
30—200 $\mu$m: 85% by weight

In order to examine the thermal shock resistance of this sintered article, the sintered tube, without being preheated, was immersed in molten iron at 1650°C. held in a high frequency furnace. After the sintered tube was held in this molten iron for 30 seconds, it was taken out and allowed to cool. The surface condition of the tube was examined, but no crack was found.

Comparative Example 1

Except that the partially stabilized zirconia powder used in Example 1 was not used, mixing 97 parts by weight of commercially available zirconia powder as a starting material zirconia powder and 3 parts by weight of commercially available light burned magnesia powder as a stabilizing agent, shaping, sintering and heat treatment were carried out under the same conditions as in Example 1. The physical properties of the sintered zirconia article obtained after the heat treatment were as follows:

| | |
|---|---|
| Bulk density | 5.5 g/cm³ |
| Water absorption | 0.11% |
| Content of cubic phase | 55% by weight |
| Diameters of the constituting particles | 30—200 $\mu$m particles constituted approximately 100% by weight |

3

In the same way as in Example 1, this sintered article was immersed in molten iron at 1650°C. for 30 seconds and then it was allowed to cool. Upon examining the tube surface, there was observed the generation of cracks clearly detectable with the eye.

Comparative Example 2

Without using partially stabilized zirconia powder, 97 parts by weight of commercially available coarse particle zirconia powder and 3 parts by weight of commercially available light burned magnesia were pulverized and sieved, and 20 parts by weight of particles having a particle diameter of 1—30 $\mu$m and 80 parts by weight of particles having a particle diameter of 30—200 $\mu$m were mixed. The mixture was then shaped, sintered and heat-treated under the same conditions as in Example 1.

The sintered zirconia article after the heat treatment, it contained cubic phase in an amount of 55% by weight, and its particle size distribution was such that 1—30 $\mu$m diameter particles constituted 20% by weight and 30—200 $\mu$m diameter particles constituted 80% by weight, but the bulk density was 4.9 g/cm³ so that the sintered density was low. Therefore the sintered article could not be put into practical use as an oxygen sensor.

Example 2

Except that the conditions shown in Table 1 were used, sintered zirconia articles were produced in the same way as in Example 1. Thermal shock resistance tests were carried out under the same conditions as in Example 1.

The results are shown in Table 1 wherein Runs 1 to 7 were carried out in accordance with the invention and Runs 8 to 12 are for comparative purposes.

TABLE 1

| Run No. | Partially stabilized zirconia powder (wt. parts) | Stabilizer | Zirconia stabilizer powder + (wt. parts) | Sintering condition (temp.× hours) °C | Heat treat- ment condition (Temp drop/hr to 1300°C; hrs. at 1300°C.) |
|---|---|---|---|---|---|
| 1 | 30 | CaO | 70 | 1700×10 | 100°C./hr; 10 hr |
| 2 | 20 | Y$_2$O$_3$ | 80 | 1700×10 | do. |
| 3 | 30 | CaO+ Y$_2$O$_3$ | 70 | 1700×10 | do. |
| 4 | 10 | MgO | 90 | 1650×10 | 80°C./hr; 10 hr |
| 5 | 20 | MgO | 80 | 1650×10 | do. |
| 6 | 20 | MgO | 80 | 1700×10 | 100°C./hr; 10 hr |
| 7 | 40 | MgO | 60 | 1700×10 | do. |
| 8 | 5 | MgO | 95 | 1700×10 | do. |
| 9 | 80 | MgO | 20 | 1700×10 | do. |
| 10 | 0 | MgO | 100 | 1700×10 | No heat treatment |
| 11 | 20 | MgO | 80 | 1700×10 | No heat treatment |
| 12 | 60 | MgO | 40 | 1700×10 | 100°C./hr; 10 hr |

TABLE 1 (cont'd)
Physical properties

| Run No. | Bulk density (g/cm³) | Cubic phase (wt.%) | Constituent particles 1—30 $\mu$m (wt.%) | Constituent particles 30—200 $\mu$m (wt.%) | Thermal shock resistance |
|---|---|---|---|---|---|
| 1 | 5.4 | 40 | 30 | 70 | No crack |
| 2 | 5.6 | 50 | 15 | 85 | do. |
| 3 | 5.5 | 45 | 20 | 80 | do. |
| 4 | 5.5 | 51 | 10 | 90 | do. |
| 5 | 5.5 | 46 | 20 | 80 | do. |
| 6 | 5.5 | 45 | 15 | 85 | do. |
| 7 | 5.4 | 32 | 35 | 65 | do. |
| 8 | 5.5 | 49 | 2 | 98 | Cracks present |
| 9 | 5.1 | 11 | 70 | 30 | No cracks |
| 10 | 5.6 | 97 | 0 | 100 | Collapsed |
| 11 | 5.6 | 80 | 5 | 95 | do. |
| 12 | 5.2 | 21 | 50 | 50 | Crack present |

4

## Claims

1. A method of producing a sintered zirconia article not more than 70 weight percent of which is of cubic phase crystal structure and which is constituted by 5—40 weight percent of particles of 1 to 30 µm diameter and correspondingly 95—60 weight percent of particles of 30—300 µm diameter which method comprises mixing (a) from 10 to 50 weight percent of partially stabilized zirconia powder of particle diameter not greater than 20 µm obtained by sintering an admixture of zirconia powder and stabilizing agent therefor and pulverizing the sintered mixture, and (b) correspondingly 90—50 weight percent of zirconia powder of particle diameter not greater than 20 µm and stabilizing agent therefor, shaping the resulting mixture, sintering the shaped mixture at a temperature in the range from 1500—1900°C for from 0.5 to 30 hours, and then heat treating the sintered mixture at a temperature from 1200° to 1500°C for from 1 to 30 hours.

2. A method according to claim 1 wherein the sintered article contains from 10 to 50 weight percent of cubic phase crystal structure.

3. A method according to claim 1 or 2 wherein the stabilizing agent is at least one of CaO, MgO and $Y_2O_3$.

4. A method according to any preceding claim wherein the amount of stabilizing agent incorporated with zirconia powder starting material is not more than 15 mol percent.

5. A method according to claim 4 wherein the amount of stabilizing agent incorporated with zirconia powder starting material is from 3 to 10 mol percent.

6. A method according to any preceding claim, wherein the particle diameters of powders (a) and (b) are not greater than 10 µm.

7. A method according to any preceding claim wherein the sintering is conducted at a temperature in the range from 1600° to 1800°C.

8. A method according to any preceding claim wherein the sintering is conducted for from 1 to 15 hours.

9. A method according to any preceding claim wherein the heat treatment is carried out for from 5 to 20 hours.

10. A method according to any preceding claim wherein the heat treatment is carried out at a temperature in the range of from 1250° to 1350°C

## Revendications

1. Procédé de fabrication d'un article fritté d'oxyde de zirconium dont pas plus de 70% en poids sont constitués d'une structure cristalline à phase cubique et qui est constitué de 5—40% en poids de particules de 1 à 30 µm de diamètre et de 95—60% en poids, de façon correspondante, de particules de 30—300 µm de diamètre, lequel procédé consiste à mélanger (a) de 10 à 50% en poids de poudre d'oxyde de zirconium partiellement stabilisé d'un diamètre de particules ne dépassant pas 20 µm, obtenue par frittage d'un mélange de poudre d'oxyde de zirconium et d'un agent stabilisant pour cette poudre et par pulvérisation du mélange fritté, et (b) 90—50% en poids, de façon correspondante, de poudre d'oxyde de zirconium d'un diamètre de particules ne dépassant pas 20 µm et d'un agent de stabilisation pour cette poudre, à mettre en forme le mélange résultant, à fritter le mélange mis en forme à une température dans la plage de 1500—1900°C pendant 0,5 à 30 heures, puis à traiter à la chaleur le mélange fritté à une température de 1200° à 1500°C pendant 1 à 30 heures.

2. Procédé selon la revendication 1, dans lequel l'article fritté contient 10 à 50% en poids de structure cristalline à phase cubique.

3. Procédé selon la revendication 1 ou 2, dans lequel l'agent de stabilisation est au moins l'un de CaO, MgO et $Y_2O_3$.

4. Procédé selon l'une quelconque des revendications précédentes, dans lequel la quantité d'agent de stabilisation incorporée à la matière de départ en poudre d'oxyde de zirconium ne dépasse pas 15 moles%.

5. Procédé selon la revendication 4, dans lequel la quantité d'agent de stabilisation incorporée à la matière de départ en poudre d'oxyde de zirconium est de 3 à 10 moles%.

6. Procédé selon l'une quelconque des revendications précédentes, caractérisé en ce que les diamètres des particules des poudres (a) et (b) ne sont pas supérieurs à 10 µm.

7. Procédé selon l'une quelconque des revendications précédentes, dans lequel le frittage est conduit à une température dans la plage de 1600° à 1800°C.

8. Procédé selon l'une quelconque des revendications précédentes, dans lequel le frittage est conduit pendant 1 à 15 heures.

9. Procédé selon l'une quelconque des revendications précédentes, dans lequel le traitement à la chaleur est effectué pendant 5 à 20 heures.

10. Procédé selon l'une quelconque des revendications précédentes, dans lequel le traitement à la chaleur est effectué à une température dans la plage de 1250° à 1350°C.

## Patentansprüche

1. Verfahren zur Herstellung eines gesinterten Gegenstandes aus Zirkonoxid, von welchem nicht mehr als 70 Gew.-% in der kubischen Kristallphasenstruktur vorliegen und 5 bis 40 Gew.-% der Teilchen einen Durchmesser von 1 bis 30 $\mu$m und entsprechend 95 bis 60 Gew.-% der Teilchen einen Durchmesser von 30 bis 300 $\mu$m aufweisen, dadurch gekennzeichnet, daß (a) 10 bis 50 Gew.-% eines partiell stabilisierten Zirkonoxidpulvers mit einem Teilchendurchmesser von nicht mehr als 20 $\mu$m, erhalten durch Sintern einer Mischung aus Zirkonoxidpulver und einem Stabilisierungsmittel dafür und Pulverisieren der gesinterten Mischung, mit (b) entsprechend 90 bis 50 Gew.-% eines Zirkonoxidpulvers mit einem Teilchendurchmesser von nicht mehr als 20 $\mu$m und einem Stabilisierungsmittel dafür vermischt werden, die erhaltene Mischung verformt wird, die verformte Mischung bei einer Temperatur zwischen 1500 und 1900°C während 0,5 bis 30 Stunden gesintert wird und anschließend die gesinterte Mischung bei einer Temperatur von 1200° bis 1500°C 1 bis 30 Stunden lang wärmebehandelt wird.

2. Verfahren nach Anspruch 1, dadurch gekennzeichnet, daß der gesinterte Gegenstand 10 bis 50 Gew.-% der in der kubischen Phase vorliegenden Kristallstruktur aufweist.

3. Verfahren nach Anspruch 1 oder 2, dadurch gekennzeichnet, daß das eingesetzte Stabilisierungsmittel aus CaO, MgO und/oder $Y_2O_3$ besteht.

4. Verfahren nach einem der vorhergehenden Ansprüche, dadurch gekennzeichnet, daß die Menge an Stabilisierungsmittel, die dem Zirkonoxidpulverausgangsmaterial zugemischt wird, nicht mehr als 15 Mol-% beträgt.

5. Verfahren nach Anspruch 4, dadurch gekennzeichnet, daß die Menge des Stabilisierungsmittels, das dem Zirkonoxidpulverausgangsmaterial zugemengt wird, 3 bis 10 Mol-% beträgt.

6. Verfahren nach einem der vorhergehenden Ansprüche, dadurch gekennzeichnet, daß die Teilchendurchmesser der Pulver (a) und (b) nicht mehr als 10 $\mu$m betragen.

7. Verfahren nach einem der vorhergehenden Ansprüche, dadurch gekennzeichnet, daß das Sintern bei einer Temperatur zwischen 1600 und 1800°C durchgeführt wird.

8. Verfahren nach einem der vorhergehenden Ansprüche, dadurch gekennzeichnet, daß das Sintern 1 bis 15 Stunden lang durchgeführt wird.

9. Verfahren nach einem der vorhergehenden Ansprüche, dadurch gekennzeichnet, daß die Wärmebehandlung 5 bis 20 Stunden lang durchgeführt wird.

10. Verfahren nach einem der vorhergehenden Ansprüche, dadurch gekennzeichnet, daß die Wärmebehandlung bei einer Temperatur zwischen 1250° und 1350°C durchgeführt wird.